# EUROPEAN PATENT APPLICATION

(11) **EP 2 391 055 A1**
(43) Date of publication of application: **30.11.2011**
(21) Application number: 10425174.9
(22) Date of filing: 25.05.2010
(51) Int. Cl.: H04L 12/12, H04L 12/24

(54) **A method and systems for operating a communications network based on energy status**

(71) Applicant: Alcatel Lucent, 75007 Paris (FR)
(72) Inventor: Parladori, Giorgio, 20129 Milano (IT); Donadio, Pasquale, 80129 Napoli (IT)
(74) Representative: Schmidt, Werner Karl

(57) **Abstract**

The invention concerns a method for operating a communications network wherein at least one energy characteristic status is determined (603), and wherein an operating mode, in particular a power consumption setting of a device forming part of said communications network, is influenced (604) depending on said at least one energy characteristic status.

## Description

### Field of the invention

The invention relates to a method, a system, a device, a first server, a second server and a third server for operating a communications network. The invention also relates to a computer program and a computer program product.

### Background

In an implementation capable of operating a communications network energy optimal routes are selected for data traffic.

These solutions are unspecific regarding type of data and do consider the infrastructure of a communications network only partially.

### Summary

The object of the invention is thus to provide an energy efficiency management of a cloud native infrastructure, i.e. an optical network and corresponding information technology infrastructure.

The main idea of the invention is to operate a communications network, wherein at least one energy characteristic status of said communications network is determined, and wherein an operating mode, in particular a power consumption setting, of a device forming part of said communications network is influenced depending on said at least one energy characteristic status. This way the power consumption of said communications network is influenced, i.e. maintained, reduced or increased, by influencing the power consumption of individual devices of said communications network depending on the energy characteristic status, i.e. the actual energy consumption, of said communications network.

Further developments of the invention can be gathered from dependent claims and the following description.

### Brief description of the figures

In the following the invention will be explained further making reference to the attached drawings.
Fig. 1 schematically shows a part of a device.
Fig. 2 schematically shows a part of a communications network and a part of an electrical power grid.
Fig. 3 schematically shows a part of a first server.
Fig: 4 schematically shows a part of a second server.
Fig. 5 schematically shows a part of a third server.
Fig. 6 schematically shows a flow chart.

### Description of the embodiments

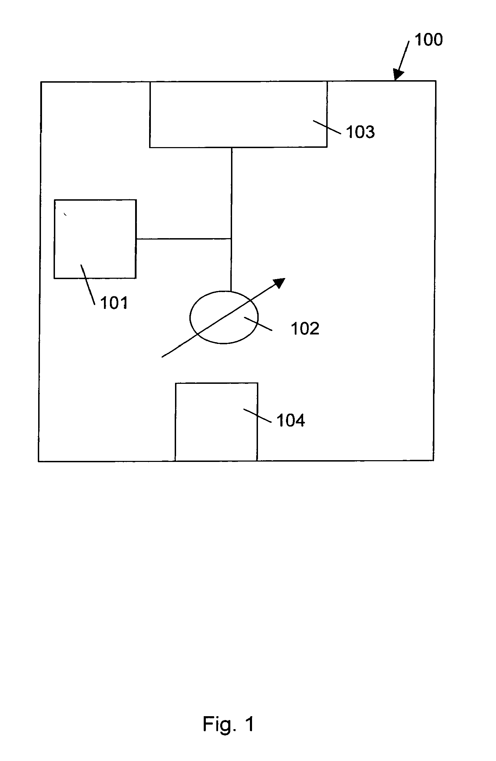

Figure 1 shows a part of a device 100, in particular an electrical device, for operating a communications network.

Said device 100 comprises of a first processor 101, a first power meter 102 and a first network device 103 that are connected via a data link.

Furthermore said device 100 comprises a power supply 104 that is adapted to receive electrical power from outside of said device 100 and distribute said electrical power to said first processor 101, said first power meter 102 and said first network device 103.

Copper wires are for example used for distributing said electrical power inside of said device 100 and are not displayed in figure 1.

Furthermore said device 100 is adapted to operate in different operating mode, in particular power consumption settings.

Said power consumption settings include but are not limited to the states: off, on, stand-by, power saving. Said power consumption settings are for example mapped to a power consumption characteristic, e.g. an actual power consumption, of said device 100 as follows:
power consumption setting -> actual power consumption
   off -> 1mW,
   on -> 1 kW,
   stand-by -> 1 W,
   power saving -> 500W.

Said power consumption settings are associated with features or capabilities referred to as energy characteristic of said device 100 below.

For example said first processor 101 is adapted to operate at different data processing characteristics, e.g. clock rates, depending on the power consumption setting. For example said clock rates map to said power consumptions settings as follows:
power consumption setting -> clock rate
   off -> 1 MHz,
   on -> 3GHz,
   stand-by -> 100MHz,
   power saving -> 1GHz.

For example said first network device 103 is adapted to operate at different data transmission characteristics, e.g. transfer rates depending on the power consumption setting. For example said transfer rates map to said power consumptions settings as follows:
power consumption setting -> transfer rates
   off -> 128KBit/s, on -> 100GBit/s, stand-by -> 128KBit/s, power saving -> 10GBit/s.
   Furthermore said device 100 is adapted to receive information for influencing said operating mode, in particular said power consumption setting, of said device 100.
   For example said first network device 103 is adapted to receive a first message comprising said information for influencing said operating mode.
   Said information for influencing said operating mode is for example an individual power target. Said individual power target is for example an upper limit of 750W for the allowed power consumption.
   Additionally said device 100 is adapted to influence said operating mode, in particular said power consumption setting, of said device 100 depending on said information for influencing said operating mode.
   For example said first processor 101 is adapted to extract said upper limit of 750W from said first message, find the highest power consumption setting that is still below or equal to said upper limit, in this case "power saving" and to change said clock rate of said first processor 101 and said transfer rate of said first network device 103 according to the mapping given above, i.e. to 1Ghz and 10GBit/s.
   Said first power meter 102 is adapted to measure an energy consumption of said device 100, e.g. in Watts.
   Furthermore said first processor 101 is adapted to determine a second message containing information about a current status, e.g. a current operating mode and a current energy consumption, of said device 100 and send it via said first network device 103.

Said second message is contains for example a string identifying said current operating mode setting i.e. "stand-by", "power-save", "on" or "off'.

Said second message is contains for example a string identifying said current energy consumption, e.g. a reading of said first power meter 102 in Watts.

Said second message comprises for example a list of current operating mode and current power consumption, e.g. "power save, 500W".

Said current actual power consumption of said device 100, is for example determined from momentary value of real time or close to real time readings of said first power meter 102.

To that end said first power meter 102 is adapted to determine said readings in said predetermined time intervals.

As described above, changing said operating mode may affect said energy characteristic, e.g. power consumption, clock rate or transfer rate. Therefore said energy characteristic is considered a predetermined attribute of said device 100. Said predetermined attribute is for example said power consumption characteristic, said data processing characteristic or said data transmission characteristic.

Said communications network may be referred to as cloud, cloud native infrastructure or cloud communications network.

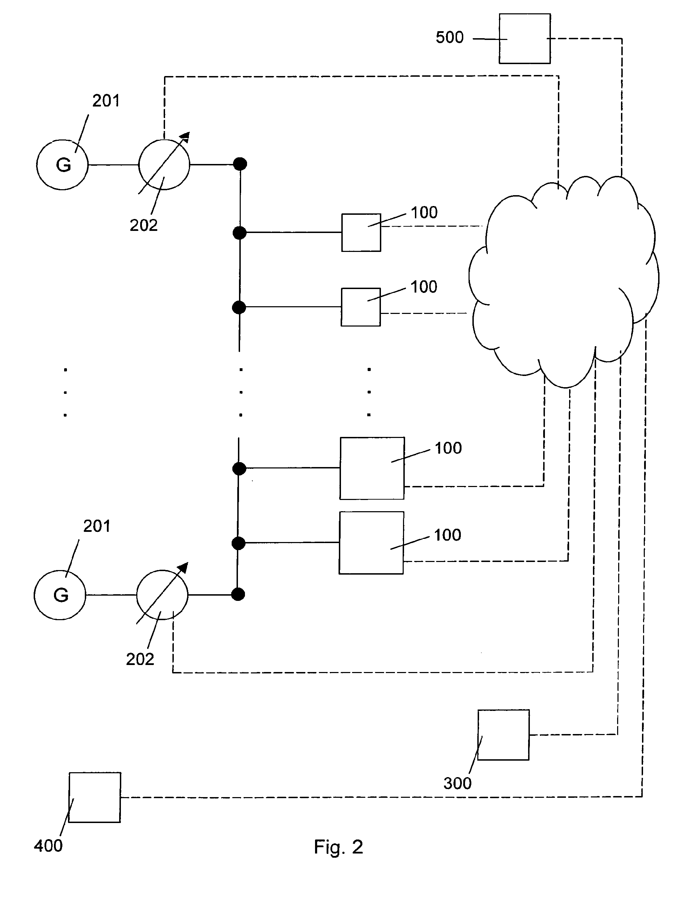

According to an example depicted in Figure 2, said communications network comprises of multiple of said devices 100. Each of said devices 100 may be identified using an unique network identification, e.g. a Media Access Control Address.

Said devices 100 are for example servers, routers, storage systems, measurement systems optical or electrical amplifiers, in general any type of device forming part of the information technology infrastructure or network infrastructure of said communications network.

Said devices 100 may also be any other type of network elements having multiple operating modes. For example said devices 100 may be optical or electrical cables including circuitry for operating them.

Additionally to said first processor 101, said first power meter 102, said first network device 103 and said power supply 104, said devices 100 are adapted according to their specific task.

Said servers are for example computers additionally equipped with volatile and non-volatile storage.

Said routers are for example computers additionally equipped with multiple network interfaces and volatile and non-volatile storage.

Said storage systems are for example computers additionally equipped with non-volatile storage and hard disks.

Said measurement systems are for example computers additionally adapted to measure performance characteristics of said routers, servers or network elements, for example bandwidth or latency.

Said devices 100 are connected in said communications network via data links. Said data links are depicted in Figure 2 as dashed lines. Said data links connect said devices 100 either directly or indirectly, via one or more other devices 100. Said direct or indirect data links are depicted in Figure 2 as a cloud. Said data links comprise for example routers, switches and data cables like optical fibers or copper wires. Said data links may also be wireless links.

Connections between said devices 100 in said communications network are for example established according to the transmission control protocol / internet protocol (well known as TCP/IP), or any other suitable protocol, e.g. according to the Ethernet or IEEE 802.11 standard.

Said devices 100 are also connected to an electrical power grid. Power links of said electrical power grid are depicted in Figure 2 as solid lines. Said electrical power grid provides energy in form of electrical power to said devices 100 via said power links.

According to the example, all devices 100 are operated by one operator and connected to the same communications network and the same electrical power grid.

Alternatively all devices 100 that are operated by one operator are connected to a sub-network of said communications network and a sub-network of said electrical power grid. The invention applies to both cases likewise.

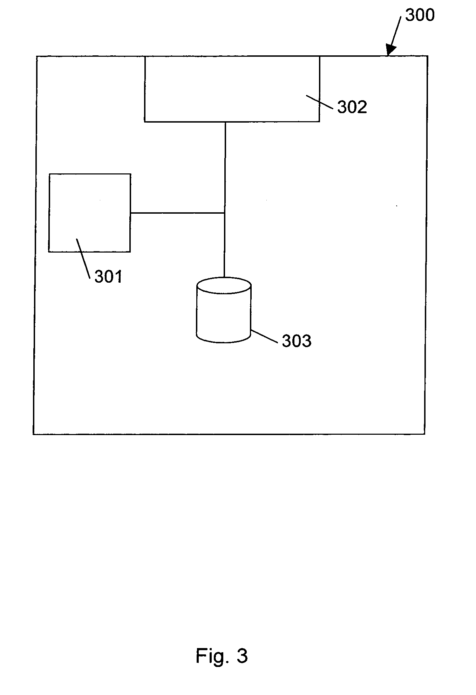

In Figure 3 shows a first server 300 comprising a second processor 301, a second network device 302 and a data base 303.

Said second processor 301, said second network device 302 and said data base 303 are connected via a data link, e.g. a data bus.

As shown in Figure 2, said first server 300 is adapted to connect to said communications network via said second network device 302.

Connections between said devices 100 and said first server 300 in said communications network are for example established according to the transmission control protocol / internet protocol (well known as TCP/IP), or any other suitable protocol, e.g. according to the Ethernet or IEEE 802.11 standard.

Said first server 300 is adapted to receive one or more of said second messages comprising said current status of said device 100 from respective devices 100.

In case multiple second messages are used said first server 300 is adapted to associate and store said current status of a particular device 100 with the unique network identifier of the respective device 100.

Said first server 300 may additionally be adapted to store information about said predetermined attribute, in particular said energy characteristic, of at least one of said devices 100, in said data base 303.

For example said first server 300 is adapted to store said mappings of said power consumption setting to said power consumption characteristic, said clock rate or said transfer rate for all of said devices 100 and associate them with the respective unique network identifier.

Furthermore said first server 300 is adapted to receive information about a predetermined power consumption target, in a third message.

Said information about said predetermined power consumption target is for example a target value for the power consumption in Watts.

Said predetermined power consumption target is for example a target value for the power consumption of said communications network as a whole.

Alternatively or additionally said predetermined power consumption target may be an upper limit for the power consumption, e.g. a power supply available to said communications network.

Alternatively or additionally multiple predetermined power consumption targets may be used to specify targets for one or more of said devices 100 specifically using the respective unique network identifier.

Said first server 300 is adapted to determine at least one energy characteristic status.

Said first server 300 is for example adapted to determine said at least one energy characteristic status depending on at least one of said second messages.

Alternatively said first server 300 is for example adapted to determine said at least one energy characteristic status depending on said predetermined power consumption target.

Said at least one energy characteristic status is for example determined as the sum of all current energy consumptions of all devices 100.

Alternatively said least one energy characteristic status may for example be an average current power consumption of said communications network determined for a certain point in time from historic values of energy consumption over time.

Additionally said first server 300 is adapted to determine said information for influencing said operating mode, in particular said power consumption setting, of at least one of said devices 100 depending on said at least one energy characteristic status.

Furthermore said first server 300 is adapted to determine said information for influencing said operating mode depending on said information about said predetermined power consumption target.

Said first server 300 is for example adapted to determine said power consumption setting depending on said target value for the power consumption of said communications network as a whole.

Furthermore said first server 300 is adapted to determine said information for influencing said operating mode, in particular said power consumption setting, of said device 100 depending on said at least one energy characteristic status.

Said first server 300 is for example adapted to determine said power consumption setting depending on said current operating mode or said current energy consumption of said device 100.

Furthermore said first server 300 is adapted to determine said information for influencing said operating mode depending on said predetermined attribute, in particular said energy characteristic of said device 100. Said energy characteristic is for example said power consumption characteristic, said data processing characteristic or said data transmission characteristic, of said device 100.

Furthermore said first server 300 is adapted to send said information for influencing said operating mode to said device 100 in said first message.

Said electrical power grid additionally comprises a generator 201 supplying electrical energy to said electrical power grid.

Energy that is provided by said generator 201 to said electrical power grid is measured using a second power meter 202. Said second power meter 202 measures for example the power output of said generator 201 in Watts. Methods for measuring energy that is provided, e.g. power output of generators, are well known to a person skilled in the art and not further explained here.

Said predetermined power consumption target is determined by a second server 400.

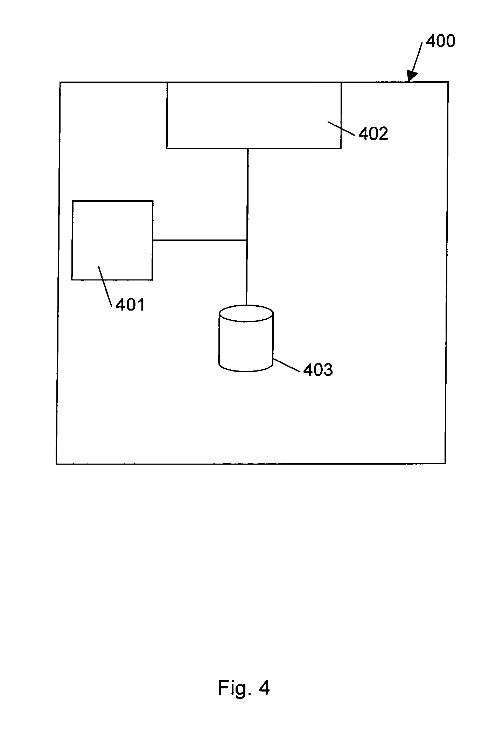

Said second server 400 is depicted in Figure 4 and comprises a third processor 401, a third network device 402 and a first storage 403. Said third processor 401, said third network device 402 and said first storage 403 are connected via a data link, e.g. a data bus.

As shown in Figure 2, said second server 400 is adapted to connect to said communications network via said third network device 402.

Connections between said first server 300 and said second server 400 in said communications network are for example established according to the transmission control protocol / internet protocol (well known as TCP/IP), or any other suitable protocol, e.g. according to the Ethernet or IEEE 802.11 standard.

Said predetermined power consumption target is for example said target value for the power consumption of said communications network as a whole and is determined from said historic data of said communications network.

Said predetermined power consumption target is for example determined manually, by said operator of said electrical power grid or autonomic depending on said power supply available to said communications network and an average energy consumption of each of said devices 100.

Said average energy consumption of each of said devices 100 varies for example depending on the time of day or day of week and is for example available from said historic data.

Alternatively for autonomic determination auto-iearning of said energy characteristic or said average energy consumption, may be implemented.

Said historic data of said communications network is for example determined by averaging multiple readings of said second power meter 202 that were taken in predetermined time intervals, e.g. of 1 minute.

Said target value for the power consumption for example is selected automatically to the same value that said historic data contains for the current day of week and time of day.

Said second power meter 202 is adapted to determine said readings in Watts in said predetermined time intervals and send a fourth message for example comprising numeric strings indicating the Watts read to said second server 400.

Connections between said second power meter 202 and said second server 400 in said communications network are for example established according to the transmission control protocol / internet protocol (well known as TCP/IP), or any other suitable protocol, e.g. according to the Ethernet or IEEE 802.11 standard.

Alternatively said fourth message is sent from said second power meter 202 to said second server 400 directly, via a private data link. In this case said second server 400 comprises an additional network interface adapted to receive said fourth message via said private data link.

According to Figure 2 multiple generators 201 supply electrical energy to said electrical power grid. Hence multiple power meters 202 are connected to respective generators 201 to measure the respective power output.

Alternatively said electrical power grid may comprise of only one generator 201 supplying electrical energy to said electrical power grid.

Alternatively energy that is provided to said electrical power grid may be measured using only one power meter 202.

Alternatively or additionally said electrical power grid may be connected to a public power network supplying electrical energy to said electrical power grid.

Alternatively or additionally energy that is provided to said electrical power grid from said public power network, may be measured using multiple power meters that measure for example the power transferred from said public power network to said electrical power grid respectively.

Alternatively or additionally information about said historic data, i.e. said power consumption, of said communications network (as a whole) is for example determined from measurements read from said multiple power meters, i.e. said energy provided to said communications network via said public power network.

Said power consumption of said communications network is for example determined from adding up the values of all readings of said multiple power meters received in said fourth messages.

To this end said second server 400 is adapted to receive said fourth message via said third network device 402, determine and said values of said readings of said multiple power meters using said third processor 401 and store them on said first storage 403. This means that said second server 400 is adapted to determine the overall power consumption of the electrical power grid.

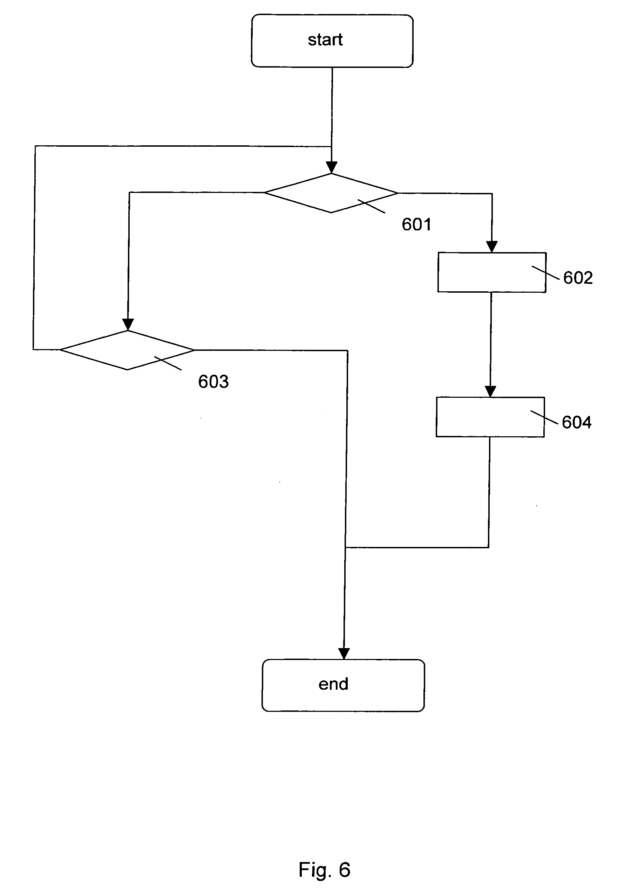

Goal of a first method depicted in a flowchart in figure 6 is a service aware energy efficiency management of said communications network. This means that all devices 100 of said communications network shall be operated in the most energy efficient way that still allows maintaining a predetermined requirement of said service, e.g. a predetermined quality of service, latency, processing or bandwidth requirement.

Said service is for example an application that is provided using at least part of said communications network.

Said service is for example an application provided in said communications network on a third server 500.

In said first method said operating modes, e.g. said individual power targets are determined depending on said predetermined requirement of said service.

Therefore said first server 300 is adapted to determine said operating modes, e.g. said individual power targets for each of said devices 100 that form part of said communications network depending on said predetermined requirement of said service and said power consumption target.

To this end said first server 300 is adapted to receive a fifth message comprising information about said predetermined requirement of said service, in particular a data storage requirement, a data processing requirement, a data transmission requirement or a power consumption requirement of said service.

Furthermore said first server 300 is adapted to determine said individual power target for a device 100 and send it to said device 100 in said first message using said unique identifier.

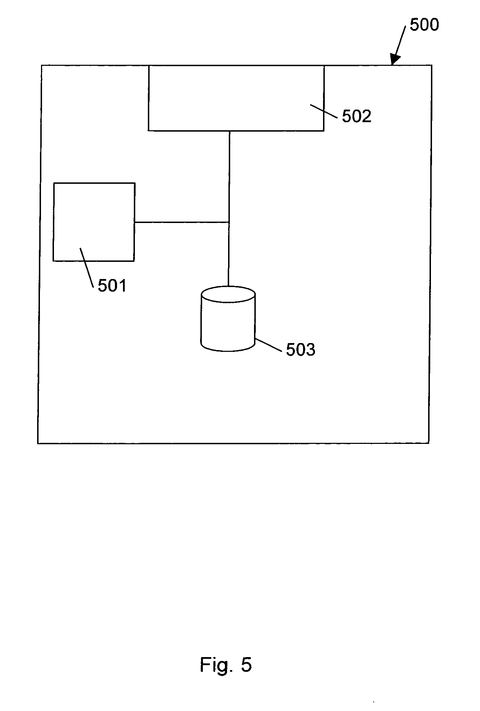

Said third server 500 is depicted in Figure 5 and comprises a fourth processor 501, a fourth network device 502 and a second storage 503. Said fourth processor 501, said fourth network device 102 and said second storage 503 are connected via a data link, e.g. a data bus.

Said second storage 503 comprises for example said predetermined requirements of said service.

Furthermore said third server 500 is adapted to determine said fifth message, comprising said predetermined requirements of said service using said fourth processor 501.

Additionally said third server 500 is adapted to send said fifth message via said fourth network device 502 to said first server 300.

As shown in Figure 2, said third server 500 is adapted to connect to said communications network via said fourth network device 502.

Connections between said first server 300 and said third server 500 in said communications network are for example established according to the transmission control protocol / internet protocol (well known as TCP/IP), or any other suitable protocol, e.g. according to the Ethernet or IEEE 802.11 standard.

Said service is for example a data storage application. In this case said fifth message comprises for example a string identifying said service and said predetermined requirements.

Said data storage application is for example named "first service" and for example requires access to maximum 5 Terabyte of storage capacity.

Exemplary keywords and values for this case are given in the following non-conclusive enumeration:

| Keyword | Values |
|---|---|
| | |
| maximum storage size: | ..., 100 Gbyte, ..., 100Tbyte, ... |
| | |
| minium bandwidth: | ..., 300 Mbit/s, ..., 100 Gbit/s, ... |
| | |
| maximum latency: | ...,20 millisecond, ..., 100 millisecond, ... |
| | |
| maximum access time: | ..., 100 millisecond, ..., 1 minute, ... |
| | |
| ... | ... |

In this case for example said fifth message contains said predetermined requirement in a first structured list:
{(first service),("storage service","5Tbyte")}.

Said fifth message may instead be defined according to the Resource Reservation Protocol - Traffic Engineering well known from IETF RFC 3209 or RFC 5151.

Said data storage application requires 5Tbyte of storage capacity, i.e. a device 100 comprising storage means of at least the required size and devices 100 that allow said third server 500 to connect to said storage means. Neither the type of said storage means nor the devices 100 used to connect to said storage means are of importance.

Alternatively or additionally said service might require a certain bandwidth or latency of one or more of said devices 100.

Said information about said predetermined requirement is for example a string containing keywords and values. Exemplary keywords and values are given in the following non-conclusive enumeration:

| Keyword | Values |
|---|---|
| | |
| type of device: | "storage", "server", "router", ... |
| | |
| miniume bandwidth: | ..., 300 Mbit/s, ..., 100 Gbit/s, ... |
| | |
| maximum latency: | ..., 20 millisecond, ..., 100 millisecond, ... |
| | |
| maximum access time: | ..., 100 millisecond, ..., 1 minute, ... |
| | |
| ... | ... |

For example said predetermined requirement comprises a second structured list:
{(first service),("type of device", "storage, router"),("maximum latency", "20 millisecond"}.

The invention applies likewise to any other service having any other type of requirement and other protocols having other means to communicate said predetermined requirement. For example said Resource Reservation Protocol - Traffic Engineering might be used or extended.

Said devices 100 are for example controlled by said first server 300 using a control strategy that controls said current energy consumption of each of said devices 100 using the respective individual power target as actuating variable. Control strategies that may be used are well known and some examples are given below in a non-exhaustive list:
- Proportiona!-integra!-derivative control (PID control),
- Sliding mode control (SMC control),
- Optimal control,
- Robust control.

Optionally any of said control mechanisms may be mixed with any other control mechanism.

Said individual power targets are sent from said first server 300 to the respective electrical device via said communications network in a said first message comprising for example said upper limit of 750W.

This means that said power consumption of said communications network is influenced, i.e. maintained, reduced or increased, by influencing, i.e. maintaining, reducing or increasing, the power consumption of said devices 100 that form part of said communications network.

Methods for determining aforementioned messages or sending them are well known to a person skilled in the art and not described further here.

The aforementioned messages with exception of said first message are sent from their respective sender to said first server 300 frequently, e.g. every 500ms. Additionally or alternatively said first server 300 may be adapted to request the sending from said respective senders. In this case said senders are adapted to respond to such request by sending said requested messages.

Said first method is described below making reference to said flowchart depicted in Figure 6.

Said first method starts, whenever said third message containing said predetermined requirement of said service is received by said first server 300.

Said third message is for example sent by said third server 500 every time said service is started on said third server.

After the start a step 601 is executed.

In said step 601 a test is performed to determine whether said second message comprising said current status of said device 100 and said fifth message comprising said predetermined power consumption target have been received. In case said second message and said fifth message have been received, a step 602 is executed. Otherwise a step 603 is executed.

In said step 603 a test is performed to check if a time-out condition is met. In case said time-out condition is met, said first method ends. Optionally an error message is send to an administrator or displayed via a graphical user interface. Otherwise said step 601 is executed.

In said step 602, said individual power target is determined.

According to said first method, information about the capabilities of said devices 100, i.e. information about said operating mode, and said predetermined requirements from said service, i.e. Quality of service, bandwidth, latency, storage capacity of said application, and said predetermined power consumption target are used to determine which of said devices 100 and which routes between them can be used to satisfy the application needs.

The information about the capabilities of said devices 100 is available from infrastructure providers and stored in said data base 303.

In the example of the storage application, said predetermined requirement comprises said second structured list:
{(first service),("type of device", "storage, router"),("maximum latency", "20 millisecond").

Said structured list is analyzed and from said data base 303 all devices that match said predetermined requirement are selected. For example said predetermined attribute, in particular said energy characteristic, i.e. said mappings of said power consumption setting to said power consumption characteristic, said clock rate or said transfer rate for all of said devices 100 are used to determine the respective unique network identifier of devices 100 matching said predetermined requirement.

According to the example a cost function is determined using said predetermined attributes, in particular said energy characteristics, of said devices 100.

For example knowledge based model of traffic profile evolution in said communications network may be used to define appropriate cost functions.

Said cost function is solved using an optimization algorithm to achieve energy optimal solution. This means that energy optimal routes, servers, routers, storage means are identified using the respective unique network identifier.

Optionally or additionally in order to minimize transition time, said cost function may consider only new devices 100, e.g. new routers or servers, that can be activated with as little transition time during deactivation/activation.

Afterwards a step 604 is executed.

In said step 604 said first message is determined and sent to said devices 100 using the respective unique network identifier.

To configure said devices 100 to the result of the energy optimal solution, said devices 100 are informed of the operating mode.

Afterwards said first method ends.

Alternatively or additionally if multiple communications networks are connected to each other, e.g. via gateways, signaling messages may be used in order to allocate said devices 100 in any of said communications networks.

A second method for operating a communications network is describe below making reference to Figure 6.

Said second method starts as said first method.

Steps 601 to 604 of said second method are the same as the respective steps of said first method and described in said first method above.

According to said second method, after said step 603 an additional step not depicted in Figure 6 is executed.

In said additional step signaling messages are sent to all devices 100 that require allocation or transition time in order to provide said service.

For example preemptive allocation, look ahead allocation or learning based allocation are used to determine which devices to allocate.

Signaling messages are for example sent to devices 100 to allocate storage or processing resources. This is for example done using request messages including storage size or processing power required. Methods for allocating such recourses are well known to the person skilled in the art.

Furthermore signaling messages are for example sent to devices 100 that require additional information to implement said energy optimal solution.

For example routing tables in routers may be updated to enable said service to actually use devices 100 that were selected according to said energy optimal solution. This may be achieved for example using the Local Preference feature of the well known Border Gateway Protocol.

Afterwards said step 604 is executed.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the figures, including any functional blocks labeled as 'first processors', may be provided through the use of dedicated hardware as well as hardware capable of executing software in association with appropriate software. When provided by a first processor, the functions may be provided by a single dedicated first processor, by a single shared first processor, or by a plurality of individual first processors, some of which may be shared. Moreover, explicit use of the term 'first processor' or 'controller' should not be construed to refer exclusively to hardware capable of executing software, and may implicitly include, without limitation, digital signal first processor (DSP) hardware, network first processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or first processor, whether or not such computer or first processor is explicitly shown.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

## Claims

1. A method for operating a communications network, **wherein** at least one energy characteristic status is determined, and wherein an operating mode, in particular a power consumption setting of a device forming part of said communications network, is influenced depending on said at least one energy characteristic status.

2. The method according to claim 1, wherein said operating mode is influenced depending on a predetermined attribute, in particular a power consumption characteristic, a data processing characteristic or a data transmission characteristic, of said device.

3. The method according to claim 1, wherein said operating mode is influenced depending on an energy characteristic of said communications network.

4. The method according to claim 1, wherein a service is provided using at least a part of said communications network, and wherein said operating mode is influenced depending on a predetermined requirement of said service, in particular a required data processing characteristic, a required transmission characteristic or a required power consumption characteristic.

5. The method according to claim 1, wherein said operating mode is influenced depending on a predetermined power consumption target.

6. The method according to claim 1, wherein said operating mode is influenced depending on the actual power consumption of said device.

7. The method according to claim 1, wherein said operating mode is influenced depending on a time period characterizing a transition from a first operating mode to a second operating mode of said device.

8. A system for operating a communications network, **wherein** a first server is adapted to receive at least one energy characteristic status of said communications network, to determine an influence to an operating mode, in particular a power consumption setting, of a device forming part of said communications network depending on said at least one energy characteristic status, to send information for influencing said operating mode to said device, and wherein said device is adapted to receive said information for influencing said operating mode and to influence said operating mode accordingly.

9. The system according to claim 7, wherein a third server is adapted to determine a predetermined requirement of a service, in particular required data processing characteristic, a required transmission characteristic or a required power consumption characteristic and to send information about said predetermined requirement to said first server.

10. A first server for operating a communications network, **adapted to** determine at least one energy characteristic status, in particular of a device forming part of said communications network, to determine an influence to an operating mode, in particular a power consumption setting, of said device depending on said at least one energy characteristic status, and to send information for influencing said operating mode to said device.

11. The first server according to claim 8, adapted to receive a power target for said communications network, in particular from a second server and to determine said information for influencing said operating mode depending on said information about said power target.

12. The first server according to claim 8, adapted to receive information about a predetermined requirement of a service, in particular required data processing characteristic, a required transmission characteristic or a required power consumption characteristic, and to determine said information for influencing said operating mode depending on said information about said predetermined requirement.

13. A device for operating a communications network, **adapted to** receive information for influencing said operating mode, in particular a power consumption setting, of said device and determined depending on at least one energy characteristic status of said communications network, and to influence said operating mode depending on said information for influencing said operating mode.

14. A second server for operating a communications network, **adapted to** determine information about at least one energy characteristic of said communications network, in particular depending on at least one power meter reading, and to send said information about said energy characteristic to a first server.

15. A third server for operating a communications network, **adapted to** determine a predetermined requirement of a service, in particular required data processing characteristic, a required transmission characteristic or a required power consumption characteristic and to send information about - said predetermined requirement to a first server.

16. A computer program for operating a communications network, **wherein** said computer program, when executed on a computer, causes the computer to determine at least one energy characteristic status, in particular of a device forming part of said communications network, is determined, and influence an operating mode, in particular a power consumption setting, of said device depending on said at least one energy characteristic status.

17. A computer program product for operating a communications network comprising a computer usable medium having a computer readable program, wherein said computer readable program, when executed on a computer, causes the computer to determine at least one energy characteristic status, in particular of a device forming part of said communications network, is determined, and influence an operating mode, in particular a power consumption setting, of said device depending on said at least one energy characteristic status.

## Amended claims

### Amended claims in accordance with Rule 137(2) EPC.

**1.** A method for operating a communications network, wherein at least one energy characteristic status is determined (601), and wherein an operating mode of a device (100) forming part of said communications network is influenced (604) depending on said at least one energy characteristic status, **characterized in that** a service is provided using at least a part of said communications network, wherein said operating mode is influenced depending on a predetermined requirement of said service.

**2.** The method according to claim 1, wherein said operating mode is influenced depending on a predetermined attribute of said device (100).

**3.** The method according to claim 1, wherein said operating mode is influenced depending on an energy characteristic of said communications network.

**4.** The method according to claim 1, wherein said operating mode is influenced depending on a predetermined power consumption target.

**5.** The method according to claim 1, wherein said operating mode is influenced depending on the actual power consumption of said device (100).

**6.** The method according to claim 1, wherein said operating mode is influenced depending on a time period characterizing a transition from a first operating mode to a second operating mode of said device (100).

**7.** A system for operating a communications network, wherein a first server is adapted to receive (601) at least one energy characteristic status of said communications network, to determine (603) an influence to an operating mode of a device (100) forming part of said communications network depending on said at least one energy characteristic status, to send (604) information for influencing said operating mode to said device (100), and wherein said device (100) is adapted to receive said information for influencing said operating mode and to influence said operating mode accordingly **characterized in that** a service is provided using at least a part of said communications network, wherein said operating mode is influenced depending on a predetermined requirement of said service.

**8.** The system according to claim 7, wherein a server (500) is adapted to determine said predetermined requirement of said service, and to send information about said predetermined requirement to said first server.

**9.** A First server (300) for operating a communications network, adapted to determine (601) at least one energy characteristic status of a device (100) forming part of said communications network, to determine (603) an influence to an operating mode of said device (100) depending on said at least one energy characteristic status, and to send (604) information for influencing said operating mode to said device (100) **characterized in that** a service is provided using at least a part of said communications network, wherein said operating mode is influenced depending on a predetermined requirement of said service.

**10.** The first server (300) according to claim 9, adapted to receive a power target for said communications network, and to determine (603) said information for influencing said operating mode depending on said information about said power target.

**11.** The first server (300) according to claim 9, adapted to receive (601) information about a said predetermined requirement of said service, and to determine (603) said information for influencing said operating mode depending on said information about said predetermined requirement.

**12.** A device (100) for operating a communications network adapted to receive information for influencing an operating mode of said device (100) determined depending on at least one energy characteristic status of said communications network, and to influence said operating mode depending on said information for influencing said operating mode **characterized in that** a service is provided using at least a part of said communications network, wherein said operating mode is influenced depending on a predetermined requirement of said service.

**13.** A server (500) for operating a communications network, adapted to determine a predetermined requirement of a service and to send (604) information about said predetermined requirement to a first server (300, **characterized in that** a service is provided using at least a part of said communications network, wherein an operating mode is influenced depending on said predetermined requirement of said service.

**14.** A computer program for operating a communications network, wherein said computer program, when executed on a computer, causes the computer to determine (601) at least one energy characteristic status, and influence (604) an operating mode, of a device (100) forming part of said communications network depending on said at least one energy characteristic status **characterized in that** a service is provided using at least a part of said communications network, wherein said operating mode is influenced depending on a predetermined requirement of said service.

**15.** A computer program product for operating a communications network comprising a computer usable medium having a computer readable program, wherein said computer readable program, when executed on a computer, causes the computer to determine (601) at least one energy characteristic status, and influence (604) an operating mode of a device (100) forming part of said communications network depending on said at least one energy characteristic status, **characterized in that** a service is provided using at least a part of said communications network, wherein said operating mode is influenced depending on a predetermined requirement of said service.
